# EUROPEAN PATENT APPLICATION

(11) **EP 3 101 227 A1**
(43) Date of publication of application: **07.12.2016**
(21) Application number: 15743518.1
(22) Date of filing: 29.01.2015
(51) Int. Cl.: E21C 27/28

(54) **RECIPROCATING IMPACT SLACK-DROP/ROTATING/RAKING MULTIFUNCTIONAL POWER SHAFT**

(30) Priority: 29.01.2014 CN 201410042607; 01.08.2014 CN 201410379365
(71) Applicant: Liu, Suhua, Yanzhou, Shandong 272100 (CN)
(72) Inventor: Liu, Suhua, Yanzhou, Shandong 272100 (CN)
(74) Representative: Lapienis, Juozas
(86) International application number: PCT/CN2015/071783
(87) International publication number: WO 2015/113505

(57) **Abstract**

A reciprocating impact slack-drop/rotating/raking multifunctional power shaft, comprising a power shaft section (5), eccentric shaft sections (6), a power take-off (2), and a power source component (4); the power take-off (2) comprising a lubricated power take-off (7) and/or a raking power take-off (8); the eccentric shaft sections (6) comprising bearing separate snap-fitted eccentric shaft sections (6) or bearing integrated sleeved eccentric shaft sections (3); the eccentric shaft sections (6) further comprising connecting rods (1), the connecting rods (1) comprising separate snap-fitted connecting rods (1) and/or integrated sleeved connecting rods (1); the power take-off (2) being arranged between the power shaft section (5) and the eccentric shaft section (6), or the power take-off (2) being arranged between the eccentric shaft section (6) and the eccentric shaft section (6), or the power take-off (2) being arranged at one end of the eccentric shaft section (6), or the power take-off (2) being arranged at one end of the power shaft section (5); the power source component (4) driving the power shaft section (5) to rotate; the eccentric shaft section (6) driving the connecting rod (1) in reciprocating motion; and the power shaft section (5) driving the lubricated power take-off and/or the raking power take-off to operate in rotation.

## Description

### Field of the Invention

The present invention relates to the field of machinery, and in particular, to a reciprocating impact slack-drop/rotating/raking multifunctional power shaft.

### Background of the Invention

At present, in a mining process of a reciprocating impact mining machine, reciprocating impact teeth are perpendicular to an object to be mined for reciprocating impact slack-drop, which is featured by a high lump rate, energy conservation, environment-friendliness, and high efficiency. The price of lump coal sold on the market at present is more than twice that of fine coal, so the reciprocating impact mining machine has a broad prospect for application. It is found in a popularization process of the product that although the mining efficiency of the reciprocating impact mining machine is very high, a rotating crank shaft of a reciprocating impact mechanism thereof has the problems of a small volume of a bearing bush installed, large born impact reaction born and a large impact lateral force, resulting in a very short service life of the rotating crank shaft, and since the bearing bush or a separate bearing is of a separate structure, has a poor anti-swing and anti-impact ability, and is vulnerable to damage and difficult to change and maintain after being damaged, therefore the reciprocating impact mining machine cannot continuously work for a long time, so that onsite use demands is difficult to meet by the reciprocating impact mining machine; in addition, a reciprocating impact slack-drop excavation head thereof has no backward material conveyance function, materials dropped by reciprocating impact are massively accumulated on a surface to be mined and cannot be conveyed to a conveyance system to be carried away, thereby seriously inhibiting the performance and popularized application of the reciprocating impact mining machine.

In order to solve the above problems and promote application of the reciprocating impact mining machine that is energy-saving, environmentally friendly and efficient and improves the material use value, the present invention provides a reciprocating impact slack-drop/rotating/raking multifunctional power shaft.

### Summary of the Invention

The present invention provides a reciprocating impact slack-drop/rotating/raking multifunctional power shaft, including a power shaft section, eccentric shaft sections, a power take-off and a power source component etc., wherein the power take-off includes a lubricated power take-off and/or a raking power take-off, etc.; the eccentric shaft section includes a bearing separate snap-fitted eccentric shaft section or a bearing integrated sleeved eccentric shaft section etc.; the eccentric shaft section further includes a connecting rod etc.; the connecting rod includes a separate snap-fitted connecting rod and/or an integrated sleeved connecting rod etc.; the power shaft section and the eccentric shaft section are separately connected or integrated; the power shaft section includes a power shaft section bearing etc.; the eccentric shaft section includes an eccentric shaft section bearing etc.; the eccentric shaft section bearing includes a separate snap-fitted bearing and/or an integrated sleeved bearing etc.; the integrated sleeved bearing is sleeved on the integrated sleeved eccentric shaft section; the integrated sleeved connecting rod is sleeved on the integrated sleeved bearing; the power take-off is arranged between the power shaft section and the eccentric shaft section, or the power take-off is arranged between the eccentric shaft section and the eccentric shaft section, or the power take-off is arranged at one end of the eccentric shaft section, or the power take-off is arranged at one end of the power shaft section etc.; the power source component drives the power shaft section etc. to rotate, the eccentric shaft section drives the connecting rod etc. to reciprocate; and the power shaft section drives the lubricated power take-off and/or the raking power take-off to rotate for working.

The reciprocating impact slack-drop/rotating/raking multifunctional power shaft includes more than one eccentric shaft section etc.; and more than two eccentric shaft sections are arranged in the same direction or arranged at equal intervals along the radial direction of the power shaft section or arranged to form an angle difference along the radial direction of the power shaft section, etc..

The reciprocating impact slack-drop/rotating/raking multifunctional power shaft is provided with a fluid passage etc.; the fluid passage penetrates through the power shaft section and/or the eccentric shaft section etc.; and the power take-off and the power shaft section are separately connected or integrated.

The raking power take-off includes a raking mechanism etc.; the raking mechanism includes a raking transmission component etc.; the raking transmission component includes a raking transmission chain wheel or a raking transmission gear or a raking transmission belt pulley or a raking transmission friction wheel or a raking transmission shaft coupler or a raking clutch or a raking transmission spline sleeve etc.; the raking mechanism further includes a raking rotation component and a racking arm etc.; the raking transmission chain wheel or the raking transmission gear or the raking transmission belt pulley or the raking transmission friction wheel or the raking transmission shaft coupler or the raking clutch etc. drive the raking rotation component to rotate; the raking rotation component drives the racking arm etc. to rotate; the raking transmission component and the raking rotation component are separately connected or integrated; and the raking rotation component and the raking arm are separately connected or integrated.

The raking clutch is arranged between the power shaft section and the raking transmission component, or the raking clutch is arranged between the raking rotation component and the raking arm, or the raking clutch is arranged between the power shaft section and the raking rotation component etc.; when the raking arm needs to perform rotary raking, the raking clutch drives the raking rotation component to drive the raking arm to rotate; and when the raking arm does not need to perform rotary raking, the raking clutch stops the raking arm from rotating.

The eccentric shaft section bearing includes a rolling bearing or a sliding bearing etc.; the sliding bearing includes a bearing bush or a bearing sleeve etc.; the raking clutch includes a one-way clutch or a two-way clutch etc.; and the clutch includes a pawl one-way overrunning clutch, a one-way overrunning clutch without a pusher dog, a one-way overrunning clutch with a pusher dog, a two-way overrunning clutch with a pusher dog, a wedge block overrunning clutch, a jaw clutch, a rotating key clutch, a gear clutch, a disc friction clutch, a cone friction clutch, a piston cylinder friction clutch, a diaphragm friction clutch, a pneumatic tire friction clutch, a friction clutch with a rotary piston cylinder, a friction clutch with a fixed piston cylinder, a jaw electromagnetic clutch, a single-disk friction electromagnetic clutch without a sliding ring, a multidisc friction electromagnetic clutch with a sliding ring, a magnetic powder clutch, a slip electromagnetic clutch or a centrifugal clutch, etc..

The power shaft section includes a power shaft section bearing retainer ring; the eccentric shaft section includes an eccentric shaft section bearing retainer ring etc.; the power shaft section bearing retainer ring and the eccentric shaft section bearing retainer ring respectively block the power shaft section bearing and the eccentric shaft section bearing etc., or the power shaft section bearing retainer ring and the eccentric shaft section bearing retainer ring are an integrated power shaft section and eccentric shaft section bearing spacer sleeve; the outside diameter of the power shaft section bearing retainer ring is smaller than the inside diameter of an outer supporting ring of the power shaft section bearing; the outside diameter of the eccentric shaft section bearing retainer ring is smaller than the inside diameter of an outer supporting ring of the eccentric shaft section bearing; the power shaft section bearing retainer ring and the eccentric shaft section bearing retainer ring form a height difference; the space of the height difference avoids the friction of the eccentric shaft section bearing retainer ring with the outer supporting ring of the power shaft section bearing during rotation and/or the space of the height difference avoids the friction of the power shaft section bearing retainer ring with the outer supporting ring of the eccentric shaft section bearing during rotation; the power shaft section and eccentric shaft section bearing spacer sleeve is arranged between the power shaft section bearing and the eccentric shaft section bearing for blocking the movement of the power shaft section bearing and the eccentric shaft section bearing; spacer sleeve anti-rotation components are arranged on the power shaft section and eccentric shaft section bearing spacer sleeve and the eccentric shaft section or on the power shaft section and eccentric shaft section bearing spacer sleeve and the power shaft section; the spacer sleeve anti-rotation components prevent the power shaft section and eccentric shaft section bearing spacer sleeve from rotating relative to the power shaft section and relative to the eccentric shaft section; the power shaft section bearing supports the rotation of the power shaft section and the eccentric shaft section; the power source component drives the power shaft section to drive the connecting rod to reciprocate; and the power shaft section bearing retainer ring and the eccentric shaft section bearing retainer ring are separately arranged or separately connected or integrated.

The raking clutch includes a clutch retainer ring etc.; the clutch retainer ring and the eccentric shaft section bearing retainer ring are separated or separately connected or integrated; the clutch retainer ring and the eccentric shaft section bearing retainer ring form a clutch and eccentric shaft section bearing spacer sleeve; the clutch and eccentric shaft section bearing spacer sleeve is arranged between the raking clutch and the eccentric shaft section bearing for blocking the movement of the clutch and the eccentric shaft section bearing; the spacer sleeve anti-rotation component or the like is arranged on the clutch and eccentric shaft section bearing spacer sleeve; the spacer sleeve anti-rotation component prevents the clutch and eccentric shaft section bearing spacer sleeve etc. from rotating relative to the eccentric shaft section; the connecting rod or the like is snap-fitted on the eccentric shaft section bearing; and the power shaft section bearing supports the rotation of the reciprocating impact slack-drop/rotating/raking multifunctional power shaft.

The power shaft section and the eccentric shaft section are combined into a crank shaft or are combined into a non-concentric cam shaft etc.; the non-concentric cam shaft includes a circular section of the eccentric shaft section and a circular section of the power shaft section; a circle center of the circular section of the eccentric shaft section and a circle center of the circular section of the power shaft section are arranged in such positions that the circular section of the power shaft section is arranged in the circular section of the eccentric shaft section, the distance between the circle center of the circular section of the power shaft section and the circle center of the circular section of the eccentric shaft section is 1/2 of a reciprocating impact stroke; the eccentric shaft section bearing is integrally installed and fixed on the eccentric shaft section by penetrating through the power shaft section; twice of the distance between the axial line of the power shaft section and the axial line of the eccentric shaft section is the reciprocating impact stroke; the power shaft section and the eccentric shaft section are separately connected or are integrated; a shoulder is arranged on one side of the eccentric shaft section; and the clutch and eccentric shaft section bearing spacer sleeve or the power shaft section and eccentric shaft section bearing spacer sleeve or a snap spring or a retain ring is arranged on the other side of the eccentric shaft section.

An anti-rotation hole or an anti-rotation groove or the like is formed on the eccentric shaft section; a projection or the like snap-fitted with the anti-rotation hole or the anti-rotation groove is arranged on the power shaft section and eccentric shaft section bearing spacer sleeve; the projection is snap-fitted with the anti-rotation hole or the anti-rotation groove etc.; or the spacer sleeve anti-rotation component includes an anti-rotation pin and a pin hole etc.; the pin hole includes a through hole and/or a blind hole etc.; a blind hole is formed on the eccentric shaft section, and a through hole or the like is formed on the power shaft section and eccentric shaft section bearing spacer sleeve; the anti-rotation pin penetrates through the through hole on the power shaft section and eccentric shaft section bearing spacer sleeve; one end of the anti-rotation pin is arranged in the blind hole on the eccentric shaft section, and the other end of the anti-rotation pin is arranged in the through hole on the power shaft section and eccentric shaft section bearing spacer sleeve; the anti-rotation pin is prevented from dropping from the through hole on the power shaft section and eccentric shaft section bearing spacer sleeve by spot welding or gluing; or a blind hole is formed on the eccentric shaft section, and a blind hole is formed on the power shaft section and eccentric shaft section bearing spacer sleeve; one end of the anti-rotation pin is arranged in the blind hole on the power shaft section and eccentric shaft section bearing spacer sleeve, and the other end of the anti-rotation pin is arranged in the blind hole on the eccentric shaft section; and the blind holes prevent the anti-rotation pin from dropping.

An anti-rotation key or the like is arranged on the inside diameter of the clutch and eccentric shaft section bearing spacer sleeve, correspondingly, a key slot or the like is formed on the eccentric shaft section and/or the power shaft section, and the anti-rotation key is pushed into the key slot to prevent rotation; or key slots etc. are formed on both the clutch and eccentric shaft section bearing spacer sleeve and the eccentric shaft section, and anti-rotation keys are arranged in the key slots of the clutch and eccentric shaft section bearing spacer sleeve and the eccentric shaft section.

A disassembly jackscrew hole is formed on the clutch and eccentric shaft section bearing spacer sleeve and/or a lifting hole or the like is formed on the eccentric shaft section.

The lubricated power take-off includes a lubricating mechanism etc.; the lubricating mechanism includes an oil throwing power component etc.; the oil throwing power component or the like is arranged on the power shaft section; the oil throwing mechanism further includes an oil throwing shaft, an oil thrower etc.; the oil throwing power component drives the oil throwing shaft etc.; the oil throwing shaft drives the oil thrower etc. to rotate to throw oil; and the oil throwing power component includes a sprocket-chain oil throwing power component or a belt pulley oil throwing power component or a rack and pinion oil throwing power component or a pin tooth type oil throwing power component or a rope and rope winder oil throwing power component or a gear oil throwing power component or a hanging tooth oil throwing power component, etc.

The reciprocating impact slack-drop/rotating/raking multifunctional power shaft further includes a clump weight etc...

The power source component further includes a driving transmission component etc.; the driving transmission component is arranged on the power shaft section or arranged between the power shaft section and the eccentric shaft section or arranged between the eccentric shaft section and the eccentric shaft section, etc.

A buffering component or the like is arranged between the eccentric shaft section and the eccentric shaft section bearing or between the power shaft section and the power shaft section bearing.

A shoulder or the like is arranged on one side of the eccentric shaft section; the power shaft section and eccentric shaft section bearing spacer sleeve or the like is arranged on the other side of the eccentric shaft section; the shoulder and the power shaft section and eccentric shaft section bearing spacer sleeve together block the movement of the eccentric shaft section bearing along the axial direction of the eccentric shaft section; and the inside diameter of the power shaft section and eccentric shaft section bearing spacer sleeve is snap-fitted and is radially located with the power shaft section.

The invention of reciprocating impact slack-drop/rotating/raking multifunctional power shaft has the following beneficial effects:
1. the integrated sleeved bearing is sleeved on the integrated sleeved eccentric shaft section, and the integrated sleeved connecting rod is sleeved on the integrated sleeved bearing, since the integrated sleeved bearing must be sleeved on the integrated sleeved eccentric shaft section, the integrated sleeved eccentric shaft section must be made to have a larger diameter than the power shaft section, thereby greatly increasing the volume and the strength of the eccentric shaft section; meanwhile, due to the increase of the eccentric shaft section, the volume and the strength of the integrated sleeved bearing are also increased, the volume and the strength of the connecting rod are increased, the power shaft section and the eccentric shaft section are integrated, which further improves the strength of the reciprocating impact slack-drop/rotating/raking multifunctional power shaft, the connecting rod is integrally sleeved on the integrated sleeved bearing, as compared with the manner that a separate connecting rod is snap-fitted on a separate bearing, the bearing capacity is improved and the cooperation precision of the components is improved as well, the power take-off is arranged between the power shaft section and the eccentric shaft section, or the power take-off is arranged between the eccentric shaft section and the eccentric shaft section, or the power take-off is arranged at one end of the eccentric shaft section, or the power take-off is arranged at one end of the power shaft section, the power source component drives the power shaft section to rotate, the eccentric shaft section drives the connecting rod to reciprocate, and the power shaft section drives the lubricated power take-off and/or the raking power take-off to rotate for working, the power necessary for reciprocating impact slack-drop and/or the power necessary for raking and material conveying is met by using the power of the power shaft section, the power source components necessary for the reciprocating impact slack-drop and the raking and material conveying etc. are integrated, thereby saving the equipment configuration, increasing the function of a power source component and power shaft section, improving the space utilization rate and completely solving the problem that inhibits popularized application of the reciprocating impact mining machine.
2. Since the more than two eccentric shaft sections are arranged at equal intervals along the radial direction of the power shaft section, the equipment mining efficiency is improved, and the reciprocating impact slack-drop/rotating/raking multifunctional power shaft is uniform in stress, long in service life and reliable in operation.
3. The reciprocating impact slack-drop/rotating/raking multifunctional power shaft is provided with the fluid passage, and the fluid passage penetrates through the power shaft section and/or the eccentric shaft section, so that the lubrication effect is improved, and the service life of the power shaft section and/or the eccentric shaft section is prolonged.
4. Since the power take-off and the power shaft section are integrated, the anti-impact and anti-vibration strength of the equipment is improved.
5. The raking transmission chain wheel or the raking transmission gear or the raking transmission belt pulley or the raking transmission friction wheel or the raking transmission shaft coupler or the raking clutch drives the raking rotation component to rotate, the raking transmission component is arranged on the power shaft section, a power source component special for the raking transmission component is avoided, the raking rotation component drives the racking arm to rotate, the raking transmission component and the raking rotation component are separately connected or integrated, the raking rotation component and the raking arm are separately connected or integrated, the equipment components are combined for use, the structure is simple and the working performance is reliable.
6. The raking clutch is arranged between the power shaft section and the raking transmission component, or the raking clutch is arranged between the raking rotation component and the raking arm, or the raking clutch is arranged between the power shaft section and the raking rotation component, when the raking arm needs to perform rotary raking, the raking clutch drives the raking rotation component to drive the raking arm to rotate, when the raking arm does not need to perform rotary raking, the raking clutch stops the raking arm from rotating, the problem that the raking and rotating arm rotates to hinder the reciprocating impact slack-drop to influence the ascending and descending of a rocker arm in a reciprocating impact slack-drop process etc. is solved, the structure is ingenious, and the practicability is good.
7. The outside diameter of the power shaft section bearing retainer ring is smaller than the inside diameter of the outer supporting ring of the power shaft section bearing, the outside diameter of the eccentric shaft section bearing retainer ring is smaller than the inside diameter of the outer supporting ring of the eccentric shaft section bearing, the power shaft section bearing retainer ring and the eccentric shaft section bearing retainer ring form the height difference, the space of the height difference avoids the friction of the eccentric shaft section bearing retainer ring with the outer supporting ring of the power shaft section bearing during rotation and/or the space of the height difference avoids the friction of the power shaft section bearing retainer ring with the outer supporting ring of the eccentric shaft section bearing during rotation, the power shaft section and eccentric shaft section bearing spacer sleeve is arranged between the power shaft section bearing and the eccentric shaft section bearing for blocking the movement of the power shaft section bearing and the eccentric shaft section bearing, the power shaft section bearing retainer ring and the eccentric shaft section bearing retainer ring are an integrated power shaft section and eccentric shaft section bearing spacer sleeve, so that the volume and the strength of the power shaft section and eccentric shaft section bearing spacer sleeve are increased, the anti-impact and anti-vibration and other abilities of the power shaft section and eccentric shaft section bearing spacer sleeve are greatly improved, the service life of the equipment is prolonged, and the maintenance is reduced.
8. The spacer sleeve anti-rotation components are arranged on the power shaft section and eccentric shaft section bearing spacer sleeve and the eccentric shaft section or on the power shaft section and eccentric shaft section bearing spacer sleeve and the power shaft section, the spacer sleeve anti-rotation components prevent the power shaft section and eccentric shaft section bearing spacer sleeve from rotating relative to the power shaft section, so that the power shaft section and eccentric shaft section bearing spacer sleeve is static relative to the power shaft section bearing and the eccentric shaft section bearing, relative operation attrition is eliminated, long-term and accurate location is guaranteed, and the movement of the power shaft section bearing and the eccentric shaft section bearing is blocked.
9. The clutch retainer ring and the eccentric shaft section bearing retainer ring form the clutch and eccentric shaft section bearing spacer sleeve, the clutch and eccentric shaft section bearing spacer sleeve is arranged between the raking clutch and the eccentric shaft section bearing for blocking the movement of the clutch and the eccentric shaft section bearing, the spacer sleeve anti-rotation component is arranged on the clutch and eccentric shaft section bearing spacer sleeve, and the spacer sleeve anti-rotation component prevents the clutch and eccentric shaft section bearing spacer sleeve from rotating relative to the eccentric shaft section.
10. The circular section of the power shaft section of the non-concentric cam shaft is arranged in the circular section of the eccentric shaft section, the distance between the circle center of the circular section of the power shaft section and the circle center of the circular section of the eccentric shaft section is 1/2 of the reciprocating impact stroke, the structure is beneficial for the eccentric shaft section bearing to penetrate through the power shaft section to be integrally installed and fixed on the eccentric shaft section, the shoulder is arranged on one side of the eccentric shaft section, and the clutch and eccentric shaft section bearing spacer sleeve or the power shaft section and eccentric shaft section bearing spacer sleeve is arranged on the other side of the eccentric shaft section, so that the eccentric shaft section bearing can be firmly arranged on the eccentric shaft section, and the eccentric shaft section, the eccentric shaft section bearing and the power shaft section and eccentric shaft section bearing spacer sleeve form optimal cooperation, the structure is simple, and the strength is large.
11. The anti-rotation hole or the anti-rotation groove is formed on the eccentric shaft section, the projection snap-fitted with the anti-rotation hole or the anti-rotation groove is arranged on the power shaft section and eccentric shaft section bearing spacer sleeve, the projection is snap-fitted with the anti-rotation hole or the anti-rotation groove, by means of the mutual limiting of the structures of the eccentric shaft section and the power shaft section and eccentric shaft section bearing spacer sleeve, the power shaft section and eccentric shaft section bearing spacer sleeve is prevented from rotating relative to the eccentric shaft section, the use of an anti-rotation pin etc. is avoided, and easily lost components and vulnerable components of the equipment are decreased.
12. A blind hole is formed on the eccentric shaft section, a through hole is formed on the power shaft section and eccentric shaft section bearing spacer sleeve, the anti-rotation pin penetrates through the through hole on the power shaft section and eccentric shaft section bearing spacer sleeve, one end of the anti-rotation pin is arranged in the blind hole on the eccentric shaft section, the other end of the anti-rotation pin is arranged in the through hole on the power shaft section and eccentric shaft section bearing spacer sleeve, the anti-rotation pin is prevented from dropping from the through hole on the power shaft section and eccentric shaft section bearing spacer sleeve by spot welding or gluing, so the quick installation and location of the anti-rotation pin are facilitated.
13. A blind hole is formed on the eccentric shaft section, a blind hole is formed on the power shaft section and eccentric shaft section bearing spacer sleeve, one end of the anti-rotation pin is arranged in the blind hole on the power shaft section and eccentric shaft section bearing spacer sleeve, the other end of the anti-rotation pin is arranged in the blind hole on the eccentric shaft section, and the blind holes prevent the anti-rotation pin from dropping, so that dropping of the anti-rotation pin in the presence of a through hole is avoid, and working procedures of spot welding or gluing etc. for fixing the anti-rotation pin are omitted.
14. The anti-rotation key is arranged on the inside diameter of the clutch and eccentric shaft section bearing spacer sleeve, correspondingly, the key slot is formed on the eccentric shaft section and/or the power shaft section, the anti-rotation key is pushed into the key slot to prevent rotation, or key slots are formed on both the clutch and eccentric shaft section bearing spacer sleeve and the eccentric shaft section, anti-rotation keys are arranged in the key slots of the clutch and eccentric shaft section bearing spacer sleeve and the eccentric shaft section, and the anti-rotation keys cooperate with the key slots to prevent the clutch and eccentric shaft section bearing spacer sleeve from rotating relative to the eccentric shaft section and/or the power shaft section.
15. The disassembly jackscrew hole is formed on the clutch and eccentric shaft section bearing spacer sleeve, and the jackscrew hole facilitate detaching the clutch and eccentric shaft section bearing spacer sleeve from the eccentric shaft section, and the lifting hole is formed on the eccentric shaft section, so that the problem that the original reciprocating impact slack-drop/rotating/raking multifunctional power shaft is hard to assemble, disassemble and maintain by manpower due to an overlarge size and weight etc. are solved, and the working efficiency is improved.
16. The oil throwing power component is arranged on the power shaft section, the oil throwing power component drives the oil throwing shaft, the oil throwing shaft drives the oil thrower to rotate to throw oil, the problems that the reciprocating impact slack-drop/rotating/raking multifunctional power shaft requires lubricating and cooling and the like are solved by taking full advantage of the power on the power shaft section, the eccentric shaft section bearing and the power shaft section bearing etc. are well lubricated, and the service life of the equipment is prolonged.
17. The clump weight is arranged on the reciprocating impact slack-drop/rotating/raking multifunctional power shaft, so that a centrifugal force and an inertia force generated by the rotation of the power shaft section can be effectively balanced, the reciprocating impact slack-drop/rotating/raking multifunctional power shaft is more stable in a rotation process, and the service life of the reciprocating impact slack-drop/rotating/raking multifunctional power shaft is prolonged.
18. Since the driving transmission component is arranged on the power shaft section or arranged between the power shaft section and the eccentric shaft section or arranged between the eccentric shaft section and the eccentric shaft section, the driving transmission component of the reciprocating impact slack-drop/rotating/raking multifunctional power shaft is conducive to accepting power transferred by the power source component from multiple positions and multiple angles.
19. The buffering component is arranged between the eccentric shaft section and the eccentric shaft section bearing or between the power shaft section and the power shaft section bearing, thereby avoiding the damage to the eccentric shaft section bearing, the power shaft section bearing and the power source component caused by reciprocating impact counteraction, and thus the service life of the reciprocating impact slack-drop/rotating/raking multifunctional power shaft is prolonged.
20. The shoulder is arranged on one side of the eccentric shaft section, the power shaft section and eccentric shaft section bearing spacer sleeve is arranged on the other side of the eccentric shaft section, the shoulder and the power shaft section and eccentric shaft section bearing spacer sleeve together block the movement of the eccentric shaft section bearing along the axial direction of the eccentric shaft section, and the inside diameter of the power shaft section and eccentric shaft section bearing spacer sleeve is snap-fitted and is radially located with the power shaft section, so as to realize the axial location and the radial location of the power shaft section and eccentric shaft section bearing spacer sleeve, the eccentric shaft section bearing and the power shaft section bearing.

### Brief Description of the Drawings

Fig. 1 is a schematic structural diagram of a reciprocating impact slack-drop/rotating/raking multifunctional power shaft in a first embodiment;
Fig. 2 is a schematic diagram of arrangement of a power shaft section bearing in the first embodiment;
Fig. 3 is a schematic structural diagram of arrangement of a power take-off in the first embodiment;
Fig. 4 is a schematic structural diagram of another arrangement mode of the power take-off in the first embodiment;
Fig. 5 is a schematic structural diagram of another arrangement mode of the power take-off in the first embodiment;
Fig. 6 is a schematic diagram of arrangement of an eccentric shaft section in a second embodiment;
Fig. 7 is a schematic diagram of another arrangement mode of the eccentric shaft section in the second embodiment;
Fig. 8 is a schematic structural diagram of arrangement of a fluid passage in a third embodiment;
Fig. 9 is a schematic structural diagram of another arrangement mode of the fluid passage in the third embodiment;
Fig. 10 is a schematic structural diagram of arrangement of a raking mechanism in a fourth embodiment;
Fig. 11 is a schematic structural diagram of another arrangement mode of the raking mechanism in the fourth embodiment;
Fig. 12 is a schematic structural diagram of a raking transmission component in the fourth embodiment;
Fig. 13 is a schematic structural diagram of arrangement of a raking clutch in the fourth embodiment;
Fig. 14 is a schematic structural diagram of the raking clutch in the fourth embodiment;
Fig. 15 is a schematic diagram of another construction of the raking clutch in the fourth embodiment;
Fig. 16 is a schematic structural diagram of arrangement of a bearing bush in a fifth embodiment;
Fig. 17 is a schematic structural diagram of arrangement of a raking clutch in the fifth embodiment;
Fig. 18 is a schematic structural diagram of arrangement of a power shaft section and eccentric shaft section bearing spacer sleeve in a sixth embodiment;
Fig. 19 is a schematic structural diagram of arrangement of a clutch and eccentric shaft section bearing spacer sleeve in a seventh embodiment;
Fig. 20 is a schematic structural diagram of a non-concentric cam shaft in an eighth embodiment;
Fig. 21 is a top view of Fig. 21 in the eighth embodiment;
Fig. 22 is a schematic structural diagram of a crank shaft in the eighth embodiment;
Fig. 23 is a schematic structural diagram of arrangement of an anti-rotation pin in a ninth embodiment;
Fig. 24 is a schematic structural diagram of another arrangement mode of the anti-rotation pin in the ninth embodiment;
Fig. 25 is a schematic structural diagram of a power shaft section and eccentric shaft section bearing spacer sleeve in the ninth embodiment;
Fig. 26 is a schematic structural diagram of another mode of the power shaft section and eccentric shaft section bearing spacer sleeve in the ninth embodiment;
Fig. 27 is a schematic structural diagram of arrangement of an anti-rotation key in a tenth embodiment;
Fig. 28 is a schematic structural diagram of arrangement of a disassembly jackscrew hole in an eleventh embodiment;
Fig. 29 is a schematic structural diagram of arrangement of a lubricating mechanism in a twelfth embodiment;
Fig. 30 is a schematic structural diagram of arrangement of a driving transmission component in a thirteenth embodiment;
Fig. 31 is a schematic structural diagram of another arrangement mode of the driving transmission component in the thirteenth embodiment;
Fig. 32 is a schematic structural diagram of another arrangement mode of the driving transmission component in the thirteenth embodiment;
Fig. 33 is a schematic structural diagram of another arrangement mode of the driving transmission component in the thirteenth embodiment.

Reference signs: 1: connecting rod, 2: power take-off, 3: bearing integrated sleeved eccentric shaft section, 4: power source component, 5: power shaft section, 6:n eccentric shaft section, 7: lubricated power take-off, 8: raking power take-off, 9: power shaft section bearing, 10: eccentric shaft section bearing, 11: eccentric shaft section A, 12: eccentric shaft section B, 13: fluid passage, 14: corrugated fluid passage groove, 15: bearing bushing, 16: fluid passage groove, 17: raking mechanism, 18: raking transmission component, 19: raking arm, 20: raking rotation component, 21: raking transmission chain wheel, 22: box body, 23: raking clutch, 24: power shaft section and eccentric shaft section bearing spacer sleeve, 25: power shaft section bearing retain erring, 26: eccentric shaft section bearing retainer ring, 27: shoulder, 28: spacer sleeve anti-rotation component, 29: clutch retainer ring, 30: clutch and eccentric shaft section bearing spacer sleeve, 31: non-concentric cam shaft, 32: circular section of the power shaft section, 33: circular section of the eccentric shaft section, 34: circle center of the circular section of the power shaft section, 35: circle center of the circular section of the eccentric shaft section, 36: crank shaft, 37: anti-rotation hole, 38: power shaft section and bearing spacer sleeve, 39: projection, 40: through hole, 41: anti-rotation pin, 42: blind hole, 43: disassembly jackscrew hole, 44: anti-rotation key, 45: key slot, 46: oil throwing power component, 47: lubricating mechanism, 48: oil thrower, 49: oil throwing shaft, 50: sprocket-chain oil throwing power component, 51: driving transmission component.

### Detailed Description of the Embodiments

The present invention will be further illustrated below in combination with the accompany drawings.

### First embodiment

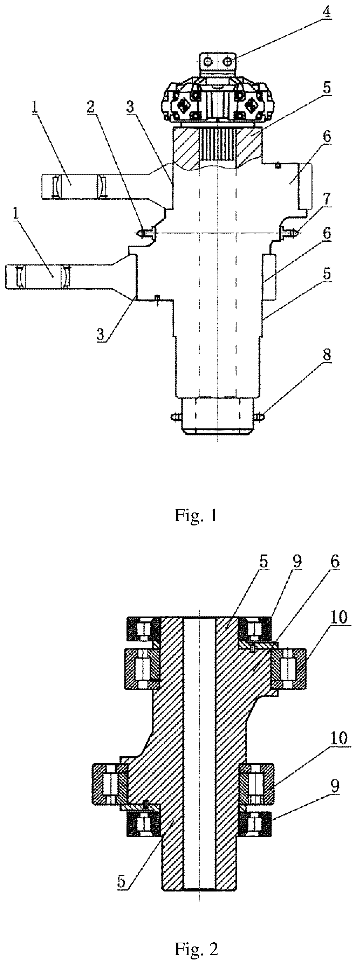

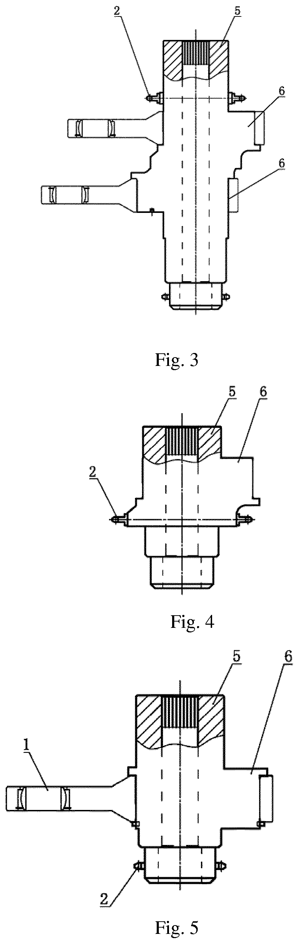

Figs. 1 to 5 show a reciprocating impact slack-drop/rotating/raking multifunctional power shaft in the first embodiment. The reciprocating impact slack-drop/rotating/raking multifunctional power shaft includes a power shaft section 5, eccentric shaft sections 6, a power take-off 2 and a power source component 4 etc.; wherein the power take-off 2 includes a lubricated power take-off 7 and/or a raking power take-off 8 etc.; the eccentric shaft section 6 includes a bearing separate snap-fitted eccentric shaft section 6 or a bearing integrated sleeved eccentric shaft section 3 etc.; the eccentric shaft section 6 further includes a connecting rod 1 etc.; the connecting rod 1 includes a separate snap-fitted connecting rod 1 and/or an integrated sleeved connecting rod 1 etc.; the power shaft section 5 and the eccentric shaft section 6 are separately connected or integrated; the power shaft section 5 includes a power shaft section bearing 9 etc.; the eccentric shaft section 6 includes an eccentric shaft section bearing 10 etc.; the eccentric shaft section bearing 10 includes a separate snap-fitted bearing and/or an integrated sleeved bearing etc.; the integrated sleeved bearing is sleeved on the integrated sleeved eccentric shaft section 6; the integrated sleeved connecting rod 1 is sleeved on the integrated sleeved bearing; the power take-off 2 is arranged between the power shaft section 5 and the eccentric shaft section 6, or the power take-off 2 is arranged between the eccentric shaft section 6 and the eccentric shaft section 6, or the power take-off 2 is arranged at one end of the eccentric shaft section 6, or the power take-off 2 is arranged at one end of the power shaft section 5 etc.; the power source component 4 drives the power shaft section 5 etc. to rotate; the eccentric shaft section 6 drives the connecting rod 1 to reciprocate; and the power shaft section 5 drives the lubricated power take-off 7 and/or the raking power take-off 8 to rotate for working.

The reciprocating impact slack-drop/rotating/raking multifunctional power shaft can be further provided with a clump weight.

A buffering component etc. can be further arranged between the eccentric shaft section 6 and an eccentric shaft section bearing 10 or between the power shaft section 5 and a power shaft section bearing 9. The buffering component includes rubber, plastic, polyester, a copper sleeve, a nylon sleeve, etc.

The present invention-creation is not limited to the above embodiment, those skilled in the art can still make equivalent modifications or substitutions without departing from the spirit of the present invention, and these equivalent modifications or substitutions fall into the scope defined by the claims of the present application.

### Second embodiment

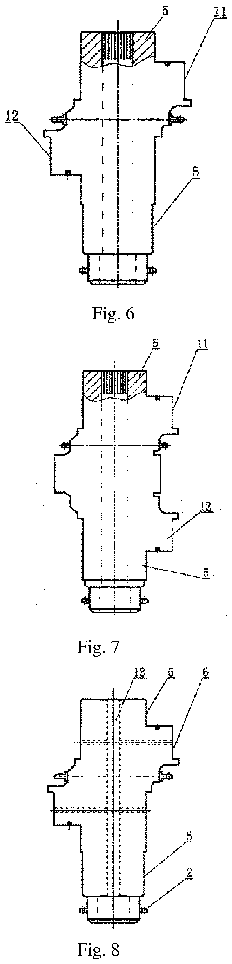

Figs. 6 to 7 show a reciprocating impact slack-drop/rotating/raking multifunctional power shaft as illustrated in the second embodiment, and the difference from the first embodiment lies in that: the reciprocating impact slack-drop/rotating/raking multifunctional power shaft includes more than one eccentric shaft section 6, as shown in Fig. 6, it includes two eccentric shaft sections 6, namely an eccentric shaft section A11 and an eccentric shaft section B12, and the eccentric shaft section A11 and the eccentric shaft section B12 are arranged in 180 degrees; as shown in Fig. 7, it includes two eccentric shaft sections 6, namely the eccentric shaft section A11 and the eccentric shaft section B12, the eccentric shaft section A11 and the eccentric shaft section B12 are arranged in the same direction or arranged at equal intervals along the radial direction of the power shaft section 5 or arranged to form an angle difference along the radial direction of the power shaft section 5.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Third embodiment

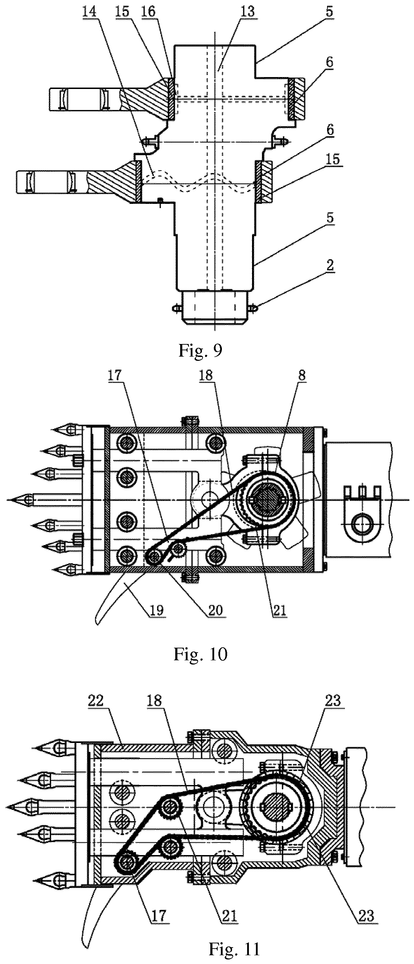

Figs. 8 to 9 show a reciprocating impact slack-drop/rotating/raking multifunctional power shaft as illustrated in the third embodiment, and the difference from the first embodiment lies in that: the reciprocating impact slack-drop/rotating/raking multifunctional power shaft is provided with a fluid passage 13; the fluid passage 13 penetrates through the power shaft section 5 and/or the eccentric shaft section 6; and the power take-off 2 and the power shaft section 5 are separately connected or integrated; as shown in Fig. 9, the fluid passage 13 is provided with a fluid passage groove 16 or a corrugated fluid passage groove 16 on the surface of the eccentric shaft section 6; and the eccentric shaft section 6 and the fluid passage 13 are cooperatively used with a bearing bushing 15.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Fourth embodiment

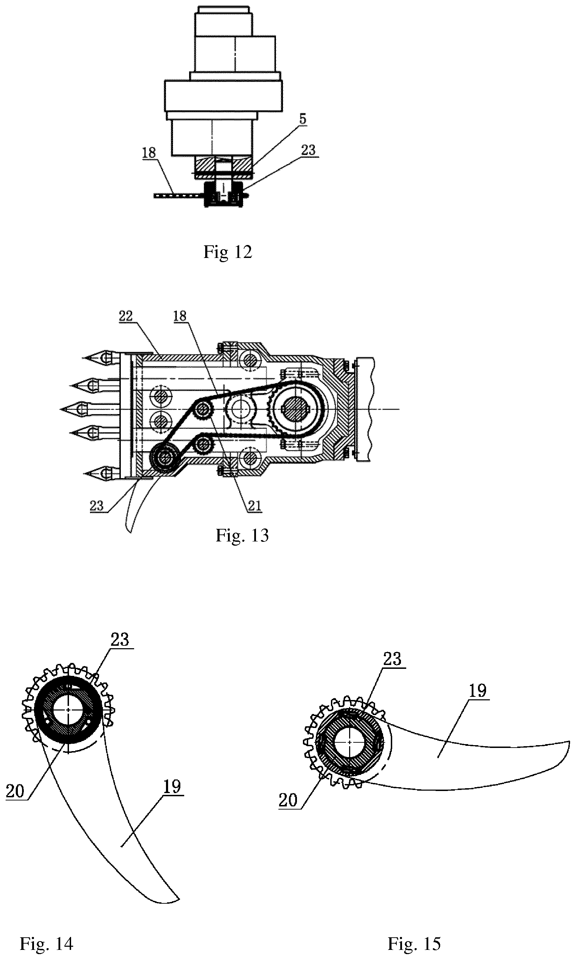

Figs. 10 to 15 show a reciprocating impact slack-drop/rotating/raking multifunctional power shaft as illustrated in the fourth embodiment, and the difference from the first embodiment lies in that: the raking power take-off 8 includes a raking mechanism 17 etc.; the raking mechanism 17 includes a raking transmission component 18 etc.; the raking transmission component 18 includes a raking transmission chain wheel 21; the raking transmission component 18 can also be a raking transmission gear or a raking transmission belt pulley or a raking transmission friction wheel or a raking transmission shaft coupler or a raking clutch or a raking transmission spline sleeve etc.; the raking mechanism 17 further includes a raking rotation component 20 and a racking arm 19 etc.; the raking transmission chain wheel 21 or the raking transmission gear or the raking transmission belt pulley or the raking transmission friction wheel or the raking transmission shaft coupler or the raking clutch 23 etc. drive the raking rotation component 20 to rotate; the raking rotation component 20 drives the racking arm 19 etc. to rotate; the raking transmission component 18 and the raking rotation component 20 are separately connected or integrated; and the raking rotation component 20 and the raking arm 19 are separately connected or integrated.

The raking clutch 23 is arranged between the power shaft section 5 and the raking transmission component 18, or the raking clutch 23 is arranged between the raking rotation component 20 and the raking arm 19, or the raking clutch 23 is arranged between the power shaft section 5 and the raking rotation component 20, etc.

When the raking arm 19 needs to perform rotary raking, the raking clutch 23 drives the raking rotation component 20 to drive the raking arm to rotate, and when the raking arm 19 does not need to perform rotary raking, the raking clutch 23 stops the raking arm 19 from rotating. The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Fifth embodiment

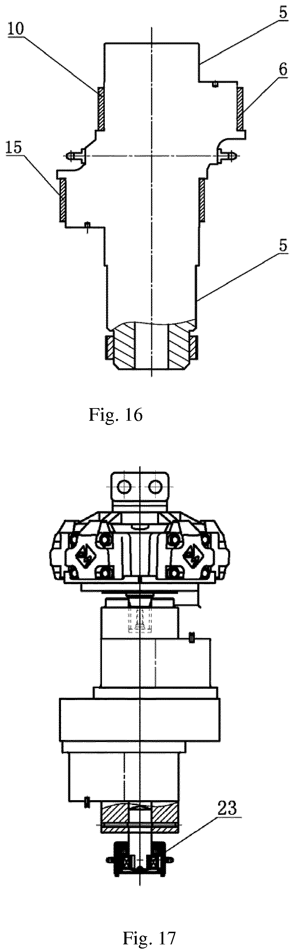

Figs. 16 to 17 show a reciprocating impact slack-drop/rotating/raking multifunctional power shaft as illustrated in the fifth embodiment, wherein the eccentric shaft section bearing 10 includes a rolling bearing or a sliding bearing etc.; the sliding bearing includes a bearing bush 15 or a bearing sleeve etc.; the raking clutch 23 includes a one-way clutch or a two-way clutch; the clutch includes a pawl one-way overrunning clutch, a one-way overrunning clutch without a pusher dog, a one-way overrunning clutch with a pusher dog, a two-way overrunning clutch with a pusher dog, a wedge block overrunning clutch, a jaw clutch, a rotating key clutch, a gear clutch, a disc friction clutch, a cone friction clutch, a piston cylinder friction clutch, a diaphragm friction clutch, a pneumatic tire friction clutch, a friction clutch with a rotary piston cylinder, a friction clutch with a fixed piston cylinder, a jaw electromagnetic clutch, a single-disk friction electromagnetic clutch without a sliding ring, a multidisc friction electromagnetic clutch with a sliding ring, a magnetic powder clutch, a slip electromagnetic clutch or a centrifugal clutch, etc.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Sixth embodiment

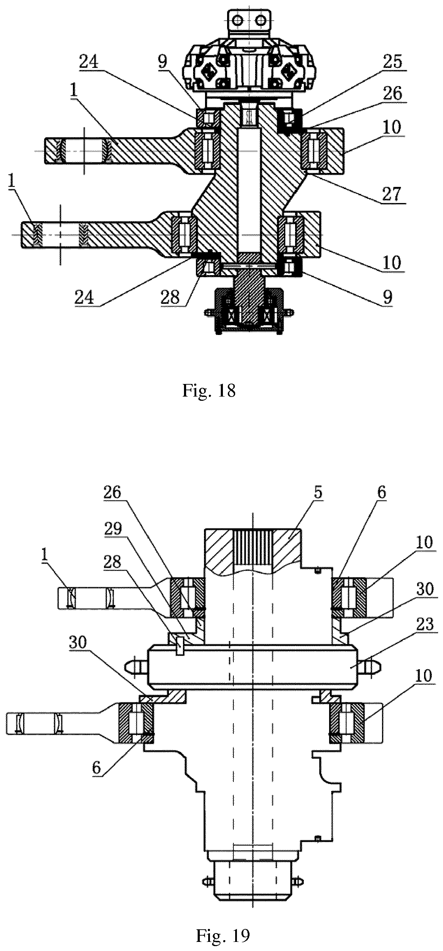

Fig. 18 shows a reciprocating impact slack-drop/rotating/raking multifunctional power shaft as illustrated in the sixth embodiment, and the difference from the first embodiment lies in that: the power shaft section 5 includes a power shaft section bearing retainer ring 25; the eccentric shaft section 6 includes an eccentric shaft section bearing retainer ring 26 etc.; the power shaft section bearing retainer ring 25 and the eccentric shaft section bearing retainer ring 26 respectively block the power shaft section bearing 9 and the eccentric shaft section bearing 10 etc.; or the power shaft section bearing retainer ring 25 and the eccentric shaft section bearing retainer ring 26 are an integrated power shaft section and eccentric shaft section bearing spacer sleeve 24; the outside diameter of the power shaft section bearing retainer ring 25 is smaller than the inside diameter of an outer supporting ring of the power shaft section bearing 9; the outside diameter of the eccentric shaft section bearing retainer ring 26 is smaller than the inside diameter of an outer supporting ring of the eccentric shaft section bearing 10; the power shaft section bearing retainer ring 25 and the eccentric shaft section bearing retainer ring 26 form a height difference; the space of the height difference avoids the friction of the eccentric shaft section bearing retainer ring 26 with the outer supporting ring of the power shaft section bearing 9 during rotation and/or the space of the height difference avoids the friction of the power shaft section bearing retainer ring 25 with the outer supporting ring of the eccentric shaft section bearing 10 during rotation; the power shaft section and eccentric shaft section bearing spacer sleeve 24 is arranged between the power shaft section bearing 9 and the eccentric shaft section bearing 10 for blocking the movement of the power shaft section bearing 9 and the eccentric shaft section bearing 10 etc.; spacer sleeve anti-rotation components 28 etc. are arranged on the power shaft section and eccentric shaft section bearing spacer sleeve 24 and the eccentric shaft section 6 or on the power shaft section and eccentric shaft section bearing spacer sleeve 24 and the power shaft section 5; the spacer sleeve anti-rotation components 28 prevent the power shaft section and eccentric shaft section bearing spacer sleeve 24 from rotating relative to the power shaft section 5 and the eccentric shaft section 6; the power shaft section bearing 9 supports the rotation of the power shaft section 5 and the eccentric shaft section 6; the power source component 4 drives the power shaft section 5 to drive the connecting rod 1 to reciprocate; and the power shaft section bearing retainer ring 25 and the eccentric shaft section bearing retainer ring 26 are separately arranged or separately connected or integrated.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Seventh embodiment

Fig. 19 shows a reciprocating impact slack-drop/rotating/raking multifunctional power shaft as illustrated in the seventh embodiment, and the difference from the first embodiment lies in that: the raking clutch 23 includes a clutch retainer ring 29 etc.; the clutch retainer ring 29 and the eccentric shaft section bearing retainer ring 26 are separated or separately connected or integrated; the clutch retainer ring 29 and the eccentric shaft section bearing retainer ring 26 form a clutch and eccentric shaft section bearing spacer sleeve 30 etc.; the clutch and eccentric shaft section bearing spacer sleeve 30 is arranged between the raking clutch 23 and the eccentric shaft section bearing 10 for blocking the movement of the clutch and the eccentric shaft section bearing 10 etc.; the spacer sleeve anti-rotation component 28 etc. are arranged on the clutch and eccentric shaft section bearing spacer sleeve 30; the spacer sleeve anti-rotation component 28 prevents the clutch and eccentric shaft section bearing spacer sleeve 30 from rotating relative to the eccentric shaft section 6; the connecting rod 1 is snap-fitted on the eccentric shaft section bearing 10; and the power shaft section bearing 9 supports the rotation of the reciprocating impact slack-drop/rotating/raking multifunctional power shaft.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Eighth embodiment

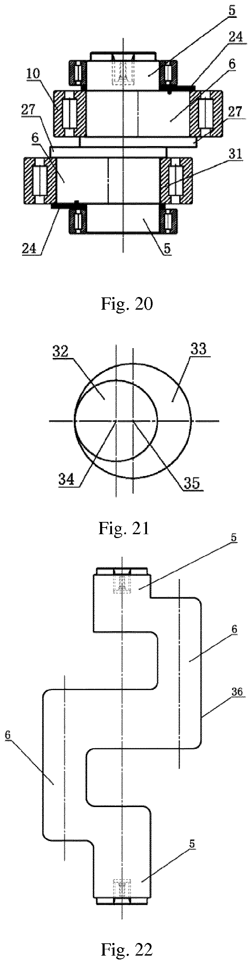

Figs. 20 to 22 show a reciprocating impact slack-drop/rotating/raking multifunctional power shaft as illustrated in the eighth embodiment, wherein the power shaft section 5 and the eccentric shaft section 6 are combined into a crank shaft 36 or are combined into a non-concentric cam shaft 31 etc.; the non-concentric cam shaft 31 includes a circular section 33 of the eccentric shaft section and a circular section 32 of the power shaft section etc.; a circle center 35 of the circular section of the eccentric shaft section and a circle center 34 of the circular section of the power shaft section are arranged in such positions that the circular section 32 of the power shaft section is arranged in the circular section 33 of the eccentric shaft section; the distance between the circle center 34 of the circular section of the power shaft section and the circle center 35 of the circular section of the eccentric shaft section is 1/2 of a reciprocating impact stroke; the eccentric shaft section bearing 10 is integrally installed and fixed on the eccentric shaft section 6 by penetrating through the power shaft section 5; twice of the distance between the axial line of the power shaft section 5 and the axial line of the eccentric shaft section 6 is the reciprocating impact stroke; the power shaft section 5 and the eccentric shaft section 6 are separately connected or are integrated; a shoulder 27 is arranged on one side of the eccentric shaft section 6; and the clutch and eccentric shaft section bearing spacer sleeve 30 or the power shaft section and eccentric shaft section bearing spacer sleeve 24 or a snap spring or a retain ring is arranged on the other side of the eccentric shaft section.

Or, the shoulder 27 is arranged on one side of the eccentric shaft section 6; the power shaft section and eccentric shaft section bearing spacer sleeve 24 is arranged on the other side of the eccentric shaft section; the shoulder 27 and the power shaft section 5 and eccentric shaft section bearing spacer sleeve together block the movement of the eccentric shaft section bearing 10 along the axial direction of the eccentric shaft section 6; and the inside diameter of the power shaft section 5 and eccentric shaft section bearing spacer sleeve is snap-fitted and is radially located with the power shaft section.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Ninth embodiment

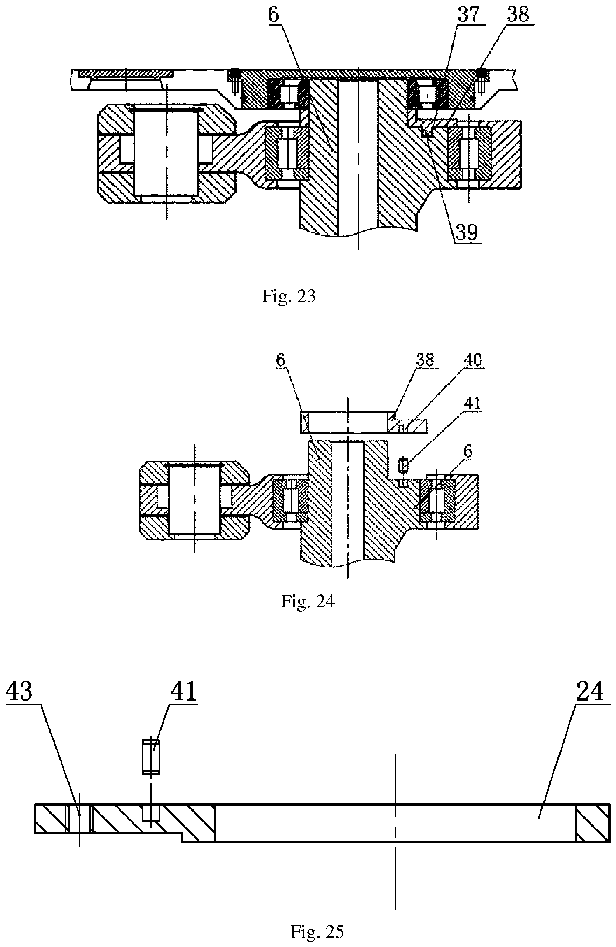

Figs. 23 to 26 show a reciprocating impact slack-drop/rotating/raking multifunctional power shaft as illustrated in the ninth embodiment, and the difference from the first embodiment lies in that: an anti-rotation hole 37 or an anti-rotation groove etc. is formed on the eccentric shaft section 6; a projection 39 or the like snap-fitted with the anti-rotation hole 37 or the anti-rotation groove is arranged on the power shaft section 6 and eccentric shaft section bearing 10 spacer sleeve; the projection 39 is snap-fitted with the anti-rotation hole 37 or the anti-rotation groove etc.; or the spacer sleeve anti-rotation component 28 includes an anti-rotation pin 41 and a pin hole etc.; the pin hole includes a through hole 40 and/or a blind hole 42; a blind hole 42 is formed on the eccentric shaft section 6, and a through hole 40 or the like is formed on the power shaft section and eccentric shaft section bearing spacer sleeve 24; the anti-rotation pin 41 penetrates through the through hole 40 on the power shaft section and eccentric shaft section bearing spacer sleeve 24; one end of the anti-rotation pin 41 is arranged in the blind hole 42 on the eccentric shaft section 6, and the other end of the anti-rotation pin is arranged in the through hole 40 on the power shaft section and eccentric shaft section bearing spacer sleeve 24; the anti-rotation pin 41 is prevented from dropping from the through hole 40 on the power shaft section and eccentric shaft section bearing spacer sleeve 24 by spot welding or gluing; or a blind hole 42 is formed on the eccentric shaft section 6, and a blind hole 42 is formed on the power shaft section and eccentric shaft section bearing spacer sleeve 24 etc.; one end of the anti-rotation pin 41 is arranged in the blind hole 42 on the power shaft section and eccentric shaft section bearing spacer sleeve 24, and the other end of the anti-rotation pin is arranged in the blind hole 42 on the eccentric shaft section 6; and the blind holes 42 prevent the anti-rotation pin 41 from dropping.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Tenth embodiment

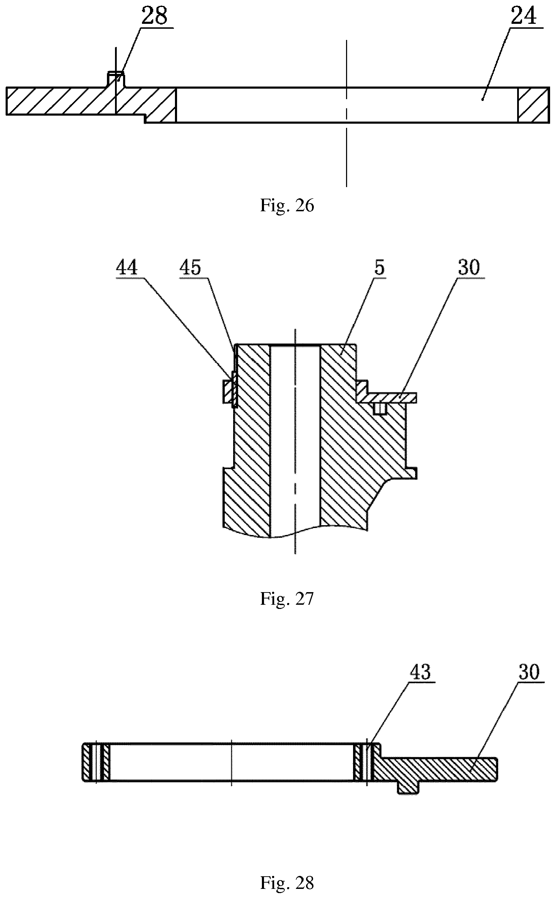

Fig. 27 shows a reciprocating impact slack-drop/rotating/raking multifunctional power shaft as illustrated in the tenth embodiment, wherein an anti-rotation key 44 etc. are arranged on the inside diameter of the clutch and eccentric shaft section bearing spacer sleeve 30; correspondingly, a key slot 45 or the like is formed on the eccentric shaft section 6 and/or the power shaft section 5; the anti-rotation key 44 is pushed into the key slot 45 to prevent rotation; or key slots 45 etc. are formed on both the clutch and eccentric shaft section bearing spacer sleeve 30 and the eccentric shaft section 6; and anti-rotation keys 44 are arranged in the key slots 45 of the clutch and eccentric shaft section bearing spacer sleeve 30 and the eccentric shaft section 6.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Eleventh embodiment

Fig. 28 shows a reciprocating impact slack-drop/rotating/raking multifunctional power shaft as illustrated in the eleventh embodiment, wherein a disassembly jackscrew hole 43 is formed on the clutch and eccentric shaft section bearing spacer sleeve 30 for facilitating the disassembly.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Twelfth embodiment

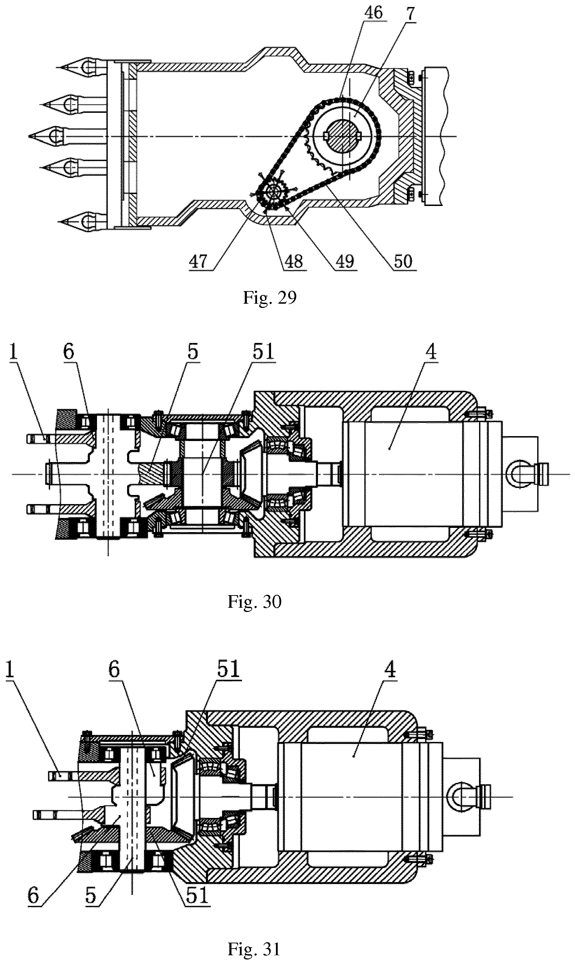

Fig. 29 shows a reciprocating impact slack-drop/rotating/raking multifunctional power shaft as illustrated in the twelfth embodiment, wherein the lubricated power take-off 7 includes a lubricating mechanism 47 etc.; the lubricating mechanism 47 includes an oil throwing power component 46 etc.; the oil throwing power component 46 or the like is arranged on the power shaft section 5; the oil throwing mechanism further includes an oil throwing shaft 49, an oil thrower 48 etc.; the oil throwing power component 46 drives the oil throwing shaft 49 etc.; the oil throwing shaft 49 drives the oil thrower 48 etc. to rotate to throw oil; and the oil throwing power component 46 includes a sprocket-chain oil throwing power component 50 or a belt pulley oil throwing power component 46 or a rack and pinion oil throwing power component 46 or a pin tooth type oil throwing power component 46 or a rope and rope winder oil throwing power component 46 or a gear oil throwing power component 46 or a hanging tooth oil throwing power component 46, etc.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

### Thirteenth embodiment

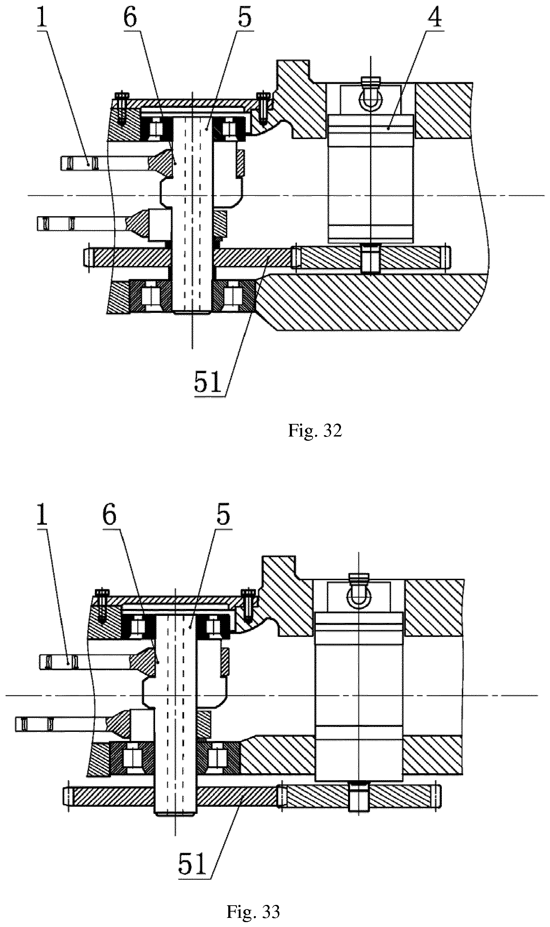

Fig. 30 to 33 show a reciprocating impact slack-drop/rotating/raking multifunctional power shaft as illustrated in the thirteenth embodiment, wherein the power source component 4 further includes a driving transmission component 51 etc.; the driving transmission component 51 is arranged on the power shaft section 5 or arranged between the power shaft section 5 and the eccentric shaft section 6 or arranged between the eccentric shaft section 6 and the eccentric shaft section 6, etc.

The present invention is not limited to the above embodiment, those skilled in the art can still make equivalent modifications or substitutions without departing from the spirit of the present invention, and these equivalent modifications or substitutions fall into the scope defined by the claims of the present application.

The rest is the same as in the first embodiment.

## Claims

1. A reciprocating impact slack-drop/rotating/raking multifunctional power shaft, comprising a power shaft section, eccentric shaft sections, a power take-off and a power source component, wherein the power take-off comprises a lubricated power take-off and/or a raking power take-off; the eccentric shaft section comprises a bearing separate snap-fitted eccentric shaft section or a bearing integrated sleeved eccentric shaft section; the eccentric shaft section further comprises a connecting rod; the connecting rod comprises a separate snap-fitted connecting rod and/or an integrated sleeved connecting rod; the power shaft section and the eccentric shaft section are separately connected or integrated; the power shaft section comprises a power shaft section bearing; the eccentric shaft section comprises an eccentric shaft section bearing; the eccentric shaft section bearing comprises a separate snap-fitted bearing and/or an integrated sleeved bearing; the integrated sleeved bearing is sleeved on the integrated sleeved eccentric shaft section; the integrated sleeved connecting rod is sleeved on the integrated sleeved bearing; the power take-off is arranged between the power shaft section and the eccentric shaft section, or the power take-off is arranged between the eccentric shaft section and the eccentric shaft section, or the power take-off is arranged at one end of the eccentric shaft section, or the power take-off is arranged at one end of the power shaft section; the power source component drives the power shaft section to rotate; the eccentric shaft section drives the connecting rod to reciprocate; and the power shaft section drives the lubricated power take-off and/or the raking power take-off to rotate for working.

2. The reciprocating impact slack-drop/rotating/raking multifunctional power shaft of claim 1, wherein the reciprocating impact slack-drop/rotating/raking multifunctional power shaft comprises more than one eccentric shaft section, and more than two eccentric shaft sections are arranged in the same direction or arranged at equal intervals along the radial direction of the power shaft section or arranged to form an angle difference along the radial direction of the power shaft section.

3. The reciprocating impact slack-drop/rotating/raking multifunctional power shaft of claim 1, wherein the reciprocating impact slack-drop/rotating/raking multifunctional power shaft is provided with a fluid passage, the fluid passage penetrates through the power shaft section and/or the eccentric shaft section, and the power take-off and the power shaft section are separately connected or integrated.

4. The reciprocating impact slack-drop/rotating/raking multifunctional power shaft of claim 1, wherein the raking power take-off comprises a raking mechanism; the raking mechanism comprises a raking transmission component; the raking transmission component comprises a raking transmission chain wheel or a raking transmission gear or a raking transmission belt pulley or a raking transmission friction wheel or a raking transmission shaft coupler or a raking clutch or a raking transmission spline sleeve; the raking mechanism further comprises a raking rotation component and a racking arm; the raking transmission chain wheel or the raking transmission gear or the raking transmission belt pulley or the raking transmission friction wheel or the raking transmission shaft coupler or the raking clutch drives the raking rotation component to rotate; the raking rotation component drives the racking arm to rotate; the raking transmission component and the raking rotation component are separately connected or integrated; and the raking rotation component and the raking arm are separately connected or integrated.

5. The reciprocating impact slack-drop/rotating/raking multifunctional power shaft of claim 4, wherein the raking clutch is arranged between the power shaft section and the raking transmission component, or the raking clutch is arranged between the raking rotation component and the raking arm, or the raking clutch is arranged between the power shaft section and the raking rotation component; when the raking arm needs to perform rotary raking, the raking clutch drives the raking rotation component to drive the raking arm to rotate; and when the raking arm does not need to perform rotary raking, the raking clutch stops the raking arm from rotating.

6. The reciprocating impact slack-drop/rotating/raking multifunctional power shaft of claim 1, wherein the eccentric shaft section bearing comprises a rolling bearing or a sliding bearing; the sliding bearing comprises a bearing bush or a bearing sleeve; the raking clutch comprises a one-way clutch or a two-way clutch; the clutch comprises a pawl one-way overrunning clutch, a one-way overrunning clutch without a pusher dog, a one-way overrunning clutch with a pusher dog, a two-way overrunning clutch with a pusher dog, a wedge block overrunning clutch, a jaw clutch, a rotating key clutch, a gear clutch, a disc friction clutch, a cone friction clutch, a piston cylinder friction clutch, a diaphragm friction clutch, a pneumatic tire friction clutch, a friction clutch with a rotary piston cylinder, a friction clutch with a fixed piston cylinder, a jaw electromagnetic clutch, a single-disk friction electromagnetic clutch without a sliding ring, a multidisc friction electromagnetic clutch with a sliding ring, a magnetic powder clutch, a slip electromagnetic clutch or a centrifugal clutch, etc.

7. The reciprocating impact slack-drop/rotating/raking multifunctional power shaft of claim 1, wherein the power shaft section comprises a power shaft section bearing retainer ring; the eccentric shaft section comprises an eccentric shaft section bearing retainer ring; the power shaft section bearing retainer ring and the eccentric shaft section bearing retainer ring respectively block the power shaft section bearing and the eccentric shaft section bearing, or the power shaft section bearing retainer ring and the eccentric shaft section bearing retainer ring are an integrated power shaft section and eccentric shaft section bearing spacer sleeve; the outside diameter of the power shaft section bearing retainer ring is smaller than the inside diameter of an outer supporting ring of the power shaft section bearing; the outside diameter of the eccentric shaft section bearing retainer ring is smaller than the inside diameter of an outer supporting ring of the eccentric shaft section bearing; the power shaft section bearing retainer ring and the eccentric shaft section bearing retainer ring form a height difference; the space of the height difference avoids the friction of the eccentric shaft section bearing retainer ring with the outer supporting ring of the power shaft section bearing during rotation and/or the space of the height difference avoids the friction of the power shaft section bearing retainer ring with the outer supporting ring of the eccentric shaft section bearing during rotation; the power shaft section and eccentric shaft section bearing spacer sleeve is arranged between the power shaft section bearing and the eccentric shaft section bearing for blocking the movement of the power shaft section bearing and the eccentric shaft section bearing; spacer sleeve anti-rotation components are arranged on the power shaft section and eccentric shaft section bearing spacer sleeve and the eccentric shaft section or on the power shaft section and eccentric shaft section bearing spacer sleeve and the power shaft section; the spacer sleeve anti-rotation components prevent the power shaft section and eccentric shaft section bearing spacer sleeve from rotating relative to the power shaft section and relative to the eccentric shaft section; the power shaft section bearing supports the rotation of the power shaft section and the eccentric shaft section; the power source component drives the power shaft section to drive the connecting rod to reciprocate; and the power shaft section bearing retainer ring and the eccentric shaft section bearing retainer ring are separately arranged or separately connected or integrated.

8. The reciprocating impact slack-drop/rotating/raking multifunctional power shaft of claim 4, wherein the raking clutch comprises a clutch retainer ring; the clutch retainer ring and the eccentric shaft section bearing retainer ring are separated or separately connected or integrated; the clutch retainer ring and the eccentric shaft section bearing retainer ring form a clutch and eccentric shaft section bearing spacer sleeve; the clutch and eccentric shaft section bearing spacer sleeve is arranged between the raking clutch and the eccentric shaft section bearing for blocking the movement of the clutch and the eccentric shaft section bearing; the spacer sleeve anti-rotation component is arranged on the clutch and eccentric shaft section bearing spacer sleeve; the spacer sleeve anti-rotation component prevents the clutch and eccentric shaft section bearing spacer sleeve from rotating relative to the eccentric shaft section; the connecting rod is snap-fitted on the eccentric shaft section bearing; and the power shaft section bearing supports the rotation of the reciprocating impact slack-drop/rotating/raking multifunctional power shaft.

9. The reciprocating impact slack-drop/rotating/raking multifunctional power shaft of claim 1, wherein the power shaft section and the eccentric shaft section are combined into a crank shaft or are combined into a non-concentric cam shaft; the non-concentric cam shaft comprises a circular section of the eccentric shaft section and a circular section of the power shaft section; a circle center of the circular section of the eccentric shaft section and a circle center of the circular section of the power shaft section are arranged in such positions that the circular section of the power shaft section is arranged in the circular section of the eccentric shaft section, and the distance between the circle center of the circular section of the power shaft section and the circle center of the circular section of the eccentric shaft section is 1/2 of a reciprocating impact stroke; the eccentric shaft section bearing is integrally installed and fixed on the eccentric shaft section by penetrating through the power shaft section; twice of the distance between the axial line of the power shaft section and the axial line of the eccentric shaft section is the reciprocating impact stroke; the power shaft section and the eccentric shaft section are separately connected or are integrated; and a shoulder is arranged on one side of the eccentric shaft section, and the clutch and eccentric shaft section bearing spacer sleeve or the power shaft section and eccentric shaft section bearing spacer sleeve or a snap spring or a retain ring is arranged on the other side of the eccentric shaft section.

10. The reciprocating impact slack-drop/rotating/raking multifunctional power shaft of claim 1, wherein an anti-rotation hole or an anti-rotation groove is formed on the eccentric shaft section; a projection snap-fitted with the anti-rotation hole or the anti-rotation groove is arranged on the power shaft section and eccentric shaft section bearing spacer sleeve; the projection is snap-fitted with the anti-rotation hole or the anti-rotation groove; or the spacer sleeve anti-rotation component comprises an anti-rotation pin and a pin hole, the pin hole comprises a through hole and/or a blind hole; a blind hole is formed on the eccentric shaft section, and a through hole is formed on the power shaft section and eccentric shaft section bearing spacer sleeve; the anti-rotation pin penetrates through the through hole on the power shaft section and eccentric shaft section bearing spacer sleeve; one end of the anti-rotation pin is arranged in the blind hole on the eccentric shaft section, and the other end of the anti-rotation pin is arranged in the through hole on the power shaft section and eccentric shaft section bearing spacer sleeve; the anti-rotation pin is prevented from dropping from the through hole on the power shaft section and eccentric shaft section bearing spacer sleeve by spot welding or gluing; or a blind hole is formed on the eccentric shaft section, and a blind hole is formed on the power shaft section and eccentric shaft section bearing spacer sleeve; one end of the anti-rotation pin is arranged in the blind hole on the power shaft section and eccentric shaft section bearing spacer sleeve, and the other end of the anti-rotation pin is arranged in the blind hole on the eccentric shaft section; and the blind holes prevent the anti-rotation pin from dropping.

11. The reciprocating impact slack-drop/rotating/raking multifunctional power shaft of claim 8, wherein an anti-rotation key is arranged on the inside diameter of the clutch and eccentric shaft section bearing spacer sleeve, correspondingly, a key slot is formed on the eccentric shaft section and/or the power shaft section, the anti-rotation key is pushed into the key slot to prevent rotation, or key slots are formed on both the clutch and eccentric shaft section bearing spacer sleeve and the eccentric shaft section, and anti-rotation keys are arranged in the key slots of the clutch and eccentric shaft section bearing spacer sleeve and the eccentric shaft section.

12. The reciprocating impact slack-drop/rotating/raking multifunctional power shaft of claim 8, wherein a disassembly jackscrew hole is formed on the clutch and eccentric shaft section bearing spacer sleeve and/or a lifting hole is formed on the eccentric shaft section.

13. The reciprocating impact slack-drop/rotating/raking multifunctional power shaft of claim 1, wherein the lubricated power take-off comprises a lubricating mechanism; the lubricating mechanism comprises an oil throwing power component; the oil throwing power component is arranged on the power shaft section; the oil throwing mechanism further comprises an oil throwing shaft and an oil thrower; the oil throwing power component drives the oil throwing shaft, and the oil throwing shaft drives the oil thrower to rotate to throw oil; and the oil throwing power component comprises a sprocket-chain oil throwing power component or a belt pulley oil throwing power component or a rack and pinion oil throwing power component or a pin tooth type oil throwing power component or a rope and rope winder oil throwing power component or a gear oil throwing power component or a hanging tooth oil throwing power component.

14. The reciprocating impact slack-drop/rotating/raking multifunctional power shaft of claim 1, wherein the reciprocating impact slack-drop/rotating/raking multifunctional power shaft further comprises a clump weight.

15. The reciprocating impact slack-drop/rotating/raking multifunctional power shaft of claim 1, wherein the power source component further comprises a driving transmission component, and the driving transmission component is arranged on the power shaft section or arranged between the power shaft section and the eccentric shaft section or arranged between the eccentric shaft section and the eccentric shaft section.

16. The reciprocating impact slack-drop/rotating/raking multifunctional power shaft of claim 1, wherein a buffering component is arranged between the eccentric shaft section and the eccentric shaft section bearing or between the power shaft section and the power shaft section bearing.

17. The reciprocating impact slack-drop/rotating/raking multifunctional power shaft of claim 1, wherein a shoulder is arranged on one side of the eccentric shaft section, the power shaft section and eccentric shaft section bearing spacer sleeve are arranged on the other side of the eccentric shaft section; the shoulder and the power shaft section and eccentric shaft section bearing spacer sleeve block the movement of the eccentric shaft section bearing together along the axial direction of the eccentric shaft section; and the inside diameter of the power shaft section and eccentric shaft section bearing spacer sleeve is snap-fitted and is radially located with the power shaft section.
